# EUROPEAN PATENT SPECIFICATION

(11) **EP 2 321 516 B1**
(45) Date of publication and mention of the grant of the patent: **19.09.2012**
(21) Application number: 09802493.8
(22) Date of filing: 23.07.2009
(51) Int. Cl.: F02M 25/022

(54) **A SYSTEM FOR SUPPLYING AN INTERNAL COMBUSTION ENGINE**
ZUFUHRSYSTEM FÜR EINEN VERBRENNUNGSMOTOR
SYSTÈME D'ALIMENTATION D'UN MOTEUR À COMBUSTION INTERNE

(30) Priority: 28.07.2008 IT PG20080035
(43) Date of publication of application: 18.05.2011
(73) Proprietor: Brum S.r.l., 20121 Milano (IT)
(72) Inventor: Ciaccini, Marco, 06018 UMBERTIDE ( PERGUIA) (IT)
(74) Representative: Dall'Olio, Giancarlo
(86) International application number: PCT/EP2009/059458
(87) International publication number: WO 2010/012645

(56) References cited:
- US-A1- 2003 188 700
- US-A1- 2006 249 102
- US-A1- 2007 119 392
- US-A1- 2008 097 679

## Description

### TECHNICAL FIELD

The invention relates to the technical sector concerning internal combustion engine.

### SUMMARY OF THE INVENTION

The aim of the invention is to realize a system for supplying an internal combustion engine that reduces fuel consumption and pollutant agents.

A known system of that type is disclosed in document US 2003/188700 A1.

The set aim is attained in accordance with the contents of the independent claim.

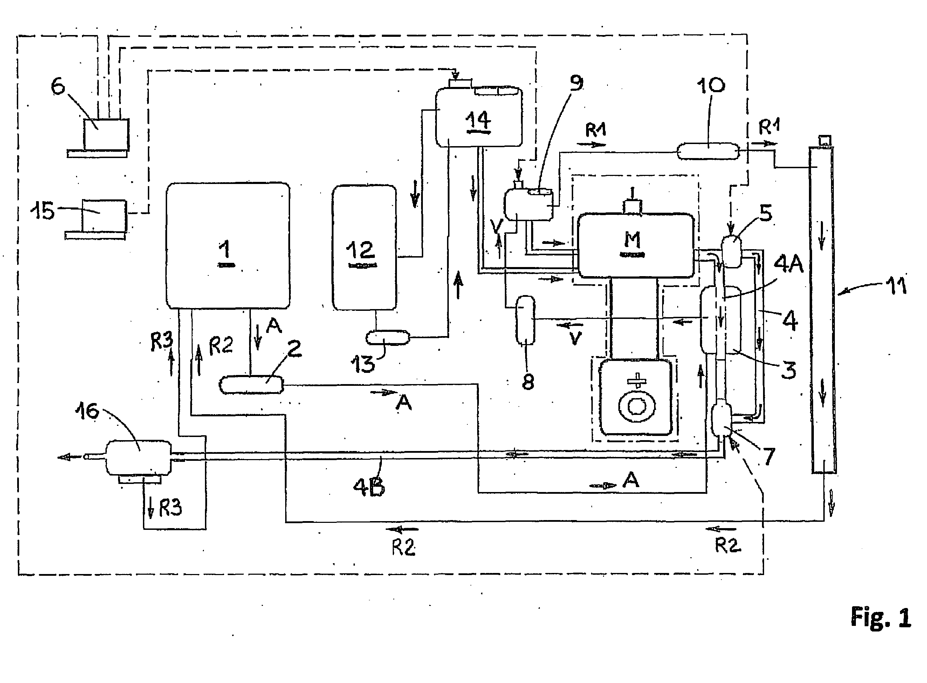

### BRIEF DESCRIPTION OF THE DRAWING

The figure of the drawing schematically represents an internal combustion engine M provided with components which in a technical-functional combination thereof define the system which is the object of the present invention.

### BEST MODE FOR CARRYING OUT THE INVENTION

The system comprises two separate injection plants, one for water steam and one for fuel, the fuel injection system being constituted, substantially, by normal series fuel plant.

The plants cooperate, in a suitable phase relation, in the functioning of the engine M.

In the first injection plant, normal water is loaded into a water tank 1 and, via a pump 2, is injected into a tube which takes it (arrows A) to a reaction chamber 3.

As is known, during functioning exhaust gases are expelled from the exhaust manifold 4 of the engine M, the exhaust gases having temperatures comprised between 350 and 900 degrees Celsius.

The reaction chamber 3 is a sealed body containing the water brought from the pump 2, enveloping an offtake 4A of the exhaust manifold 4 ; thus the reaction chamber 3 defines a heat exchanger.

The gases which are indirectly in metallic contact with the reaction chamber 3 overheat the water and increase the pressure and temperature thereof, causing it to pass from the liquid phase into the gas phase.

The result of the overheating is steam, which has temperature and pressure properties which are regulated by various electromechanical valves.

All of the valve and steam actuator regulations are performed by a steam injection control unit 6 constituted by a computer with a microchip and a hard disk.

The steam injection control unit 6 exhibits data reading channels connected with various sensors (not illustrated) and enables data to be acquired in real-time, the data being temperature, pressure, rotating speed etc.

When the data has been obtained, calculations are made in times and lengths for piloting the actuators and valves.

The reading, calculating and piloting operations regulate the functioning of all the steam part within the preset ranges, and consequently regulate a part of the performance of the engine M.

The exhaust gas flow valve 5, located upstream of the offtake 4A, is controlled by the steam injection control unit 6 to regulate the quantity of the exhaust gases channel into the offtake 4A to heat the reaction chamber 3; if anomalous temperatures are detected in the reaction chamber 3, the flow valve 5 partialises or stops passage of gases through the offtake 4A, directing them into the exhaust manifold 4.

The exhaust gas block valve 7, located downstream of the branch 4A, is commanded by the steam injection control unit 6 to regulate the outflow of the exhaust gases coming from the offtake 4A and replace them in the exhaust pipe 4B, on exiting the manifold 4.

The steam pressure regulator 8 regulates the temperature and pressure of the steam exiting from the reaction chamber 3, taking the steam, at a more or less constant temperature, to the steam injection command unit 9 (see arrows V).

The steam injection command unit 9 injects the steam produced by the reaction chamber 3 during the stage of aspiration, and associates the stem to the fuel in quantities and at times which, according to the conditions, are preset by the steam injection control unit 6.

The non-injected excess steam produced by the reaction chamber 3 is expelled by the steam injection command unit 9 in quantities and at pressures which are regulated by the steam expeller 10 (see arrows R1).

The steam expeller 10 selects the pressure and temperatures of the excess steam and channels the steam into a special tubing connected at an end thereof to the steam cooling radiator 11.

The steam crosses the steam cooling radiator 11, its pressure and temperature thus lowering until it is returned to the liquid phase.

The water exiting the steam cooling radiator 11 is recycled and returns to the water tank 1 (arrows R2).

The fuel injection plant comprises, in a known way, a tank 12 and a pump 13 which supplies an injection command 14.

The injection command 14 injects the fuel during the aspiration stage of the engine M and is piloted in times and moments by a relative injection control unit 15.

The injection control unit 15, like the steam injection control unit 6, comprises data reading channels connected with various sensors and enables acquisition of data in real-time, such as temperature, pressure, rotating speed etc.

When the data has been obtained, the injection control unit 15 processes it in times and lengths for piloting the actuators and valves. The reading operations, calculation and piloting regulate the functioning of all the fuel part within the preset ranges.

As with the steam injection plant, the excess fuel not injected by the injection command 14 is returned via a tube to the tank 12.

The steam injection plant, in a preferred embodiment thereof, is provided with a final steam collection device 16, positioned in proximity of the exhaust terminal, which recuperates the final condensation formed therein, returning it to the water tank 1 (arrows R3).

The water steam and fuel are associated in percentages thereof and injected into the internal combustion engine during the aspiration stage. Though they are compressed together, the combustion is produced only by the traditional fuel.

In the combustion chamber, during combustion, specific temperatures of from 600 to 1000 degrees Celsius are reached.

The water steam compressed in the combustion chamber generates enormous pressures which push the pistons during the exhaust stage.

The evaporation and pressure generation times between the steam and the combustion temperatures are almost instantaneous.

The injected steam lowers the temperatures in the combustion chamber, and the thermal yield of the engine is consequently increased.

The correct association of quantities of the steam and fuel drastically reduces the pollution levels.

The specific unit quantity of fuel used in association with water steam is drastically reduced in comparison with traditional engines, for a same thermal yield.

The water steam does not pollute and by creating it in the reaction chamber 3 part of the heat associated to the waste products of an internal combustion engine and the exhaust gases is recuperated.

All types of water can be used, including waste water, as the solid impurities therein can be separated during vaporisation in the reaction chamber 3.

The invention, concerning a supply system of an internal combustion engine, can be applied to internal combustion engines for vehicles, work machines, transport, turbines, generators, pumps, compressors etc.

No re-designing or large-scale structural modifications are necessary for the industrial producers of internal combustion engines; indeed the re-use of designs otherwise considered obsolete (as being too pollutant) is possible.

The invention can give rise to a specific conversion kit for models already present on the market, considerably increasing the working life and use of internal combustion engines.

It can provide a fresh design departure for new models without having to modify the fuel distribution system.

The prototype of the invention which has been constructed and tested has provided performance levels hitherto unknown for internal combustion engines, both in terms of consumption and performance, not to mention the very small quantities of noxious powders expelled.

The application fields can be found in all the solutions where there is an internal combustion engine.

A rapid and easy installation, certainly relatively very inexpensive, can eliminate and improve many of the problems connected to all internal combustion engines.

## Claims

1. A system for supplying an internal combustion engine having at least a cylinder, including a fuel injection plant, comprising an injection control unit (15), destined to pilot at least an injection command (14) for introducing batched quantities of fuel internally of the cylinder, in a phase relation with an aspiration,
wherein it includes a steam injection plant comprising: means (3) for generating and storing the steam in sufficient quantities for ensuring a continuous availability thereof; a steam injection command unit (9), supplied with steam at a controlled pressure, sourcing from the means (3) for generating the steam, and destined to introduce batched quantities of the steam internally of the cylinder; a steam injection control unit (6) provided for controlling and piloting the means for generating and storing (3) the steam for supplying the steam to the steam injection command unit (9), as well as for piloting the steam injection command unit (9) in order for the introduction of steam into the cylinder to be done in a phase relation with the aspiration and with the injection of fuel, such that it cooperates with the fuel in order to determine a thrust on a piston of the cylinder, in an active stage of the cycle, following a combustion of the fuel;
wherein the means (3) for generating and storing the steam comprise: a reaction chamber (3) and a pump (2) for removing the water and sending the water to the reaction chamber (3), in which reaction chamber (3) the water is heated up to vaporizing, resulting steam being sent to the steam injection command unit (9),
wherein the reaction chamber (3) comprises a heat exchanger, which uses exhaust gases from the engine (M) for the vaporizing of the water, wherein it comprises a steam pressure regulator (8), interposed between the reaction chamber (3) of the means for generating and storing steam and the steam injection command unit (9), the steam pressure regulator (8) being destined to maintain the supply pressure of the steam to the steam injection command unit (9) practically constant,
wherein it comprises a steam expeller (10), associated to the steam injection command unit (9), destined to intercept excess steam which has flowed into the steam injection command unit (9), and to divert the excess steam through a pipe;
**characterised in that**
the reaction chamber (3) is conformed such as to envelop an offtake (4A) realised in an exhaust manifold (4) of the cylinder, which offtake (4A) opens into an exhaust pipe (4B) at an outlet of the manifold (4);
the means (3) for generating and storing the steam also comprise a water tank (1) containing water, the pump (2) removing the water from the water tank (1) and sending it to the reaction chamber (3);
an exhaust gas flow valve (5) is located upstream of the offtake (4A), which flow valve (5) is commanded by the steam injection control unit (6) in order to regulate the quantity of exhaust gases channelled into the offtake (4A) for heating the reaction chamber (3);
an exhaust gas block valve (7) is located downstream of the offtake (4A), which block valve (7) is commanded by the steam injection control unit (6) for regulating the outflow of exhaust gases from the offtake (4A) towards the exhaust pipe (4B);
the steam expeller (10) being destined to divert the excess steam to a steam cooling radiator (11) in which the steam is returned to the liquid state and is then sent to the water tank (1).

2. The system of claim 1, **characterised in that** it comprises a final steam collection device (16), positioned in proximity of a discharge terminal of the engine (M) for recuperating final condensation that has formed in the discharge terminal and for sending the condensation into the water tank (1).

## Patentansprüche

1. Zufuhrsystem für einen Verbrennungsmotor mit zumindest einem Zylinder, beinhaltend eine Kraftstoffeinspritzanlage, die eine Einspritzsteuereinheit (15) beinhaltet, die dazu dient, zumindest einen Einspritzbefehl (14) zur Eingabe dosierter Mengen von Kraftstoff in den Zylinder, in Phasenbeziehung zu einem Ansaugvorgang, anzusteuern,
worin dieses System eine Dampfeinspritzanlage beinhaltet, die Folgendes umfasst: Mittel (3) zur Erzeugung und Speicherung von Dampf in ausreichender Menge, um dessen kontinuierliche Verfügbarkeit sicherzustellen; eine Befehlseinheit (9) zur Dampfeinspritzung, die mit Dampf unter kontrolliertem Druck, der von den Mitteln (3) zur Erzeugung des Dampfes erzeugt ist, gespeist wird und dazu dient, dosierte Mengen von Dampf in den Zylinder einzuleiten; eine Steuereinheit (6) zur Dampfeinspritzung, die dazu dient, die Mittel (3) zur Erzeugung und Speicherung von Dampf zu kontrollieren und zu steuern, um den Dampf der Befehlseinheit (9) zur Dampfeinsprizung zuzuführen, sowie dafür bestimmt ist, die Befehlseinheit (9) zur Dampfeinspritzung so zu steuern, dass die Einleitung des Dampfes in den Zylinder in Phasenbeziehung mit der Ansaugung und mit der Einspritzung von Kraftstoff erfolgt, so dass er mit dem Kraftstoff zusammenwirkt, um eine Schubkraft auf den Kolben des Zylinders in einer aktiven Phase des Zyklus im Anschluss an die Verbrennung des Kraftstoffes zu bewirken;
worin die Mittel (3) zur Erzeugung und Speicherung von Dampf Folgendes beinhalten: eine Reaktionskammer (3) und eine Pumpe (2) zum Entfernen des Wassers und zum Leiten des Wassers in die Reaktionskammer (3), wobei in der Reaktionskammer (3) das Wasser bis zur Verdampfung erhitzt wird, so dass Dampf an die Befehlseinheit (9) zur Dampfeinspritzung geleitet wird,
worin die Reaktionskammer (3) einen Wärmeübertrager beinhaltet, der die Abgase vom Motor (M) für die Verdampfung von Wasser verwendet, worin das System einen Dampfdruckregler (8) beinhaltet, der zwischen der Reaktionskammer (3) der Mittel zur Erzeugung und Speicherung von Dampf und der Befehlseinheit (9) zur Dampfeinspritzung angeordnet ist, wobei der Dampfdruckregler (8) dafür bestimmt ist, den Zufuhrdruck des Dampfes zu der Befehlseinheit (9) zur Dampfeinspritzung praktisch konstant zu halten,
worin das System einen Dampfejektor (10) beinhaltet, der mit der Befehlseinheit (9) zur Dampfeinspritzung verbunden ist und dazu dient, den überschüssigen Dampf, der in die Befehlseinheit (9) zur Dampfeinspritzung eingeströmt ist, abzufangen und den überschüssigen Dampf durch ein Rohr abzuleiten;
**dadurch gekennzeichnet, dass**
die Reaktionskammer (3) derart beschaffen ist, dass sie eine Ableitung (4A) umhüllt, die in einem Abgaskrümmer (4) des Zylinders ausgefertigt ist, wobei diese Ableitung (4A) in ein Abgasrohr (4B) am Ausgang des Krümmers (4) mündet;
die Mittel (3) zur Erzeugung und Speicherung von Dampf ferner einen Wassertank (1) beinhalten, der Wasser enthält, sowie eine Pumpe (2), um das Wasser aus dem Wassertank (1) zu entfernen und in die Reaktionskammer (3) zu leiten;
ein Abgas-Durchflussventil (5) stromaufwärts vor der Ableitung (4A) angeordnet ist, wobei dieses Durchflussregelventil (5) durch die Steuereinheit (6) zur Dampfeinspritzung angesteuert wird, um die Menge
der in die Ableitung (4A) eingeleiteten Abgase zum Erhitzen der Reaktionskammer (3) zu regulieren;
ein Abgas-Absperrventil (7) stromabwärts nach der Ableitung (4A) angeordnet ist, wobei dieses Absperrventil (7) durch die Steuereinheit (6) zur Dampfeinspritzung angesteuert wird, um das Ausströmen von Abgasen aus der Ableitung (4A) zum Abgasrohr (4B) hin zu regulieren; der Dampfejektor (10) dafür bestimmt ist, den überschüssigen Dampf zu einem Dampfkühler (11) umzuleiten, in dem der Dampf in den flüssigen Zustand zurückversetzt und dann in den Wassertank (1) geleitet wird.

2. System nach Anspruch 1, **dadurch gekennzeichnet, dass** es eine Dampf-Endsammelvorrichtung (16) beinhaltet, die in der Nähe eines Auspuff-Endabschnittes des Motors (M) angeordnet ist und dazu dient, das im Auspuff-Endabschnitt gebildete Endkondensat zu rekuperieren und das Kondensat in den Wassertank (1) zu leiten.

## Revendications

1. Un système d'alimentation d'un moteur à combustion interne ayant au moins un cylindre, incluant un système d'injection de carburant, comprenant une unité de contrôle d'injection (15), destinée à piloter au moins une commande d'injection (14) pour introduire des quantités dosées de carburant à l'intérieur du cylindre, en relation de phase avec une aspiration,
où il inclut un système d'injection de vapeur comprenant : des moyens (3) pour la génération et l'accumulation de vapeur en quantité suffisante pour assurer une disponibilité continue de celle-ci ; une unité de commande d'injection de vapeur (9), alimentée en vapeur à une pression contrôlée, provenant desdits moyens (3) de génération de vapeur, et destinée à introduire des quantités dosées de vapeur à l'intérieur du cylindre ; une unité de contrôle d'injection de vapeur (6) prévue pour contrôler et piloter les moyens (3) de génération et d'accumulation de vapeur pour alimenter la vapeur à ladite unité de commande d'injection de vapeur (9), ainsi que pour piloter ladite unité de commande d'injection de vapeur (9) afin que l'introduction de vapeur dans le cylindre ait lieu en relation de phase avec l'aspiration et avec l'injection de carburant, de manière à ce qu'elle coopère avec le carburant pour déterminer une poussée sur un piston du cylindre, durant une phase active du cycle, qui suit la combustion du carburant ;
où les moyens (3) de génération et d'accumulation de vapeur comprennent ; une chambre de réaction (3)
et une pompe (2) pour prélever l'eau et envoyer l'eau à ladite chambre de réaction (3), l'eau étant chauffée jusqu'à vaporisation dans ladite chambre de réaction (3), avec envoi conséquent de la vapeur à l'unité de commande d'injection de vapeur (9),
où la chambre de réaction (3) comprend un échangeur de chaleur, qui utilise les gaz d'échappement du moteur (M) pour la vaporisation de l'eau,
où il comprend un régulateur de pression de la vapeur (8), interposé entre la chambre de réaction (3) des moyens de génération et d'accumulation de vapeur et l'unité de commande d'injection de vapeur (9), le régulateur de pression de la vapeur (8) étant destiné à maintenir quasiment constante la pression d'alimentation de la vapeur à l'unité de commande d'injection de vapeur (9),
où il comprend un expulseur de vapeur (10), associé à l'unité de commande d'injection de vapeur (9), destiné à intercepter la vapeur en excès s'étant écoulée dans l'unité de commande d'injection de vapeur (9) et à dévier ladite vapeur en excès à travers un tuyau ;
**caractérisé en ce que**
la chambre de réaction (3) est conformée de manière à envelopper une dérivation (4A) réalisée dans un collecteur d'échappement (4) du cylindre, ladite dérivation (4A) débouchant dans un tuyau d'échappement (4B) situé au niveau d'une sortie du collecteur (4) ;
les moyens (3) de génération et d'accumulation de vapeur comprennent aussi un réservoir d'eau (1) contenant de l'eau, la pompe (2) prélevant l'eau dudit réservoir d'eau (1) et l'envoyant à la chambre de réaction (3) ;
une vanne de flux des gaz d'échappement (5) est située en amont de la dérivation (4A), ladite vanne de flux (5) est commandée par l'unité de contrôle d'injection de vapeur (6) de manière à réguler la quantité des gaz d'échappement véhiculés dans la dérivation (4A) pour chauffer la chambre de réaction (3)
une vanne d'arrêt des gaz d'échappement (7) est située en aval de la dérivation (4A), ladite vanne d'arrêt (7) est commandée par l'unité de contrôle d'injection de vapeur (6) pour réguler l'écoulement des gaz d'échappement de la dérivation (4A) vers le tuyau d'échappement (4B) ;
l'expulseur de vapeur (10) étant destiné à véhiculer la vapeur en excès vers un radiateur de refroidissement de la vapeur (11), dans lequel la vapeur est ramenée à l'état liquide et est ensuite envoyée au réservoir d'eau (1).

2. Le système selon la revendication 1, **caractérisé en ce qu'**il comprend un dispositif de récupération finale de la vapeur (16), situé à proximité du terminal d'échappement du moteur (M) pour récupérer la condensation finale qui s'est formée dans le terminal d'échappement et pour envoyer ladite condensation dans le réservoir d'eau (1).
